(19) Europäisches Patentamt
European Patent Office
Office européen des brevets

(11) **EP 2 352 983 B1**

(12) **EUROPÄISCHE PATENTSCHRIFT**

(45) Veröffentlichungstag und Bekanntmachung des Hinweises auf die Patenterteilung:
**05.12.2012 Patentblatt 2012/49**

(21) Anmeldenummer: **09743888.1**

(22) Anmeldetag: **23.10.2009**

(51) Int Cl.:
***G01N 11/00*** *(2006.01)*

(86) Internationale Anmeldenummer:
**PCT/EP2009/063956**

(87) Internationale Veröffentlichungsnummer:
**WO 2010/060701 (03.06.2010 Gazette 2010/22)**

(54) **RHEOMETER FÜR DICKSTOFFE**

RHEOMETER FOR HIGH-VISCOSITY MATERIALS

RHÉOMÈTRE POUR MATIÈRES ÉPAISSES

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **28.11.2008 DE 102008059534**

(43) Veröffentlichungstag der Anmeldung:
**10.08.2011 Patentblatt 2011/32**

(73) Patentinhaber: **Putzmeister Engineering GmbH**
**72631 Aichtal (DE)**

(72) Erfinder: **KASTEN, Knut**
**73760 Ostfildern (DE)**

(74) Vertreter: **Gauss, Nikolai et al**
**Wolf & Lutz Patentanwälte**
**Hauptmannsreute 93**
**70193 Stuttgart (DE)**

(56) Entgegenhaltungen:
**DE-A1- 3 933 973    GB-A- 2 347 749**

**Beschreibung**

Die Erfindung betrifft ein Rheometer für Dickstoffe mit einem Behälter zur Aufnahme von Dickstoff und mit einer Messeinrichtung für das Fließverhalten von Dickstoff in dem Behälter. Die Erfindung betrifft weiter eine Vorrichtung für das Bestimmen des Förderwiderstands von Dickstoff in einem Rohrleitungssystem sowie ein Verfahren des zur Überwindung des Förderwiderstands von Dickstoffen in einem Rohrleitungssystem aufzubringenden Förderdrucks.

Ein Rheometer ist ein Messgerät zur Ermittlung des Fließverhaltens von Materie. Rheometer der eingangs genannten Art sind in der Bauform des Rotationsrheometers bekannt und beispielsweise beschrieben in: "Comparison of concrete rheometers: International tests at LCPC (Nantes, France) in October, 2000, NISTIR 6819". Diese Rheometer haben einen mit Dickstoff befüllbaren Behälter und eine Messeinrichtung mit einer drehbeweglichen Messgeometrie für Drehmomentmessung. Bei einer Drehbewegung der Messgeometrie entsteht aufgrund des in den Behälter gefüllten Dickstoffs ein Drehmoment, das gemessen wird. Hieraus lässt sich das Fließverhalten des Dickstoffs ermitteln.

Das Fließverhalten von Dickstoffen bestimmt deren Verarbeitbarkeit, Verdichtbarkeit und Förderbarkeit.

So tritt in Rohrleitungen beim Fördern von Dickstoffen wie z.B. Beton oder Klärschlamm, Kohleschlamm oder Bioabfall ein Förderwiderstand auf, der vom Fließverhalten des Dickstoffs abhängt. Ursache des Förderwiderstands ist die Reibung des Dickstoffs mit der Rohrleitungswandung und die Verformungsarbeit, die am Dickstoff beim Transport durch eine Rohrleitung anfällt. Die Verformungsarbeit ist auf den inneren Verformungswiderstand des Dickstoffs zurückzuführen.

Der Förderwiderstand bewirkt, dass eine Dickstoffpumpe für das Fördern von Dickstoffen über eine Höhendifferenz $\Delta h$ durch ein Rohrleitungssystem nicht nur einen Druck $P_{\Delta h}$ erzeugen muss, der dem Druck entspricht, welchen eine Dickstoffsäule über eine Höhendifferenz $\Delta h$ am Ausgang der Dickstoffpumpe im Anschlussbereich des Rohrleitungssystems hervorruft, sondern noch einen zusätzlichen Druck $P_{FW}$.

Für den Druck $P_{\Delta h}$ gilt im Regelfall:

$$P_{\Delta h} = g \ \rho \ \Delta h \, , \qquad\qquad (1)$$

wobei $g$ die Erdbeschleunigung und p die Dichte des Dickstoffs ist. Der zusätzliche Druck $P_{FW}$ muss aufgebracht werden, um den erwähnten Förderwiderstand im Rohrleitungssystem zu überwinden.

Die Folge ist, dass eine Dickstoffpumpe wenigstens den Förderdruck

$$P_F = P_{FW} + P_{\Delta h} \qquad\qquad (2)$$

bereitstellen muss, um einen Dickstoff über die Höhendifferenz $\Delta h$ durch das Rohrleitungssystem zu fördern.

Es ist bekannt, für das Fördern von Pumpbeton durch ein Rohrleitungssystem mit einem gegebenen Rohrleitungsdurchmesser $D$ und einer gegebenen Rohrleitungslänge $L$ bei einer gewünschten Fördermenge und einer bestimmten, mit dem Ausbreitmaß nach DIN EN 12350-5 klassifizierten Pumpbeton-Konsistenz, den benötigten Druck $P_{FW}$ zur Überwindung des Förderwiderstands mittels eines Nomogramms abzuschätzen. Das Ausbreitmaß nach DIN EN 12350-5 wird dabei als Maß für das Fließverhalten von Beton herangezogen. Diese Methode der Abschätzung von $P_{FW}$ basiert auf Erfahrungswerten bzw. auf einem Messdatensatz, der für zahlreiche Pumpbetonsorten an unterschiedlichen Rohrleitungssystemen aufgenommen wurde. Ein solches Nomogramm ist z.B. auf S.53 der Putzmeister-Firmenbroschüre "Betontechnologie für Betonpumpe" abgebildet und erläutert.

Bei bekannter Dichte $\rho_{PB}$ des Pumpbetons und gegebener Förderhöhe $\Delta h$ eines Rohrleitungssystems mit Rohrleitungslänge $L$ und Rohrleitungsdurchmesser $D$ kann mit diesem Nomogramm für eine gewünschte Fördermenge $Q$ von Pumpbeton pro Zeiteinheit auf den Förderdruck $P_F$ geschlossen werden.

Es zeigt sich aber, dass diese Vorgehensweise nur zur Abschätzung von $P_{FW}$ für sogenannten einfachen Pumpbeton geeignet ist, d.h. wenn es sich bei dem Pumpbeton um ein Dreistoffgemisch mit den Hauptbestandteilen Zuschlagstoffe, Wasser und Zement handelt. Wenn nämlich einfacher Pumpbeton für bestimmte Anwendungen mit Zusatzstoffen und/oder Zusatzmitteln, etwa Fließmitteln versetzt wird, ist das Fließverhalten von Beton über das Ausbreitmaß nach DIN EN 12350-5 nicht mehr zutreffend charakterisiert. Für Pumpbeton mit Zusatzmitteln kann deshalb mit dem oben erwähnten Nomogramm der benötigte Förderdruck $P_F$ für ein Rohrleitungssystem nicht mehr gut abgeschätzt werden.

Auch die bekannten Rotationsrheometer für Dickstoffe eignen sich nicht dazu, das Fließverhalten von Beton so zu bestimmen, dass sich daraus für ein Rohrleitungssystem der benötigte Förderdruck $P_F$ zuverlässig ermitteln lässt.

Um den in einem Rohrleitungssystem benötigten Förderdruck $P_F$ für Pumpbeton zu bestimmen, der mit Zusätzen versetzt ist, oder aber auch um einen Förderdruck $P_F$ für andere Dickstoffe zu ermitteln, etwa für Klärschlamm, für Kohleschlämme oder für Bioabfälle, werden daher bislang aufwendige Pumpversuche durchgeführt: Der entsprechende Dickstoff wird durch einen Versuchsaufbau mit dem für den konkreten Einsatz vorgesehenen Rohrleitungssystem gepumpt. An dem Versuchsaufbau werden dann für unterschiedliche Fördergeschwindigkeiten des Dickstoffs die Druckverhältnisse im Rohrleitungssystem erfasst. Insbesondere wird im Anschlussbereich der Dickstoffpumpe an das Rohrleitungssystem der auftretende Druck gemessen. Dieser gemessene Druck entspricht dann dem Förderdruck $P_F$.

Ausgehend hiervon liegt der Erfindung die Aufgabe zugrunde, ein Rheometer bereitzustellen, mit dem das Fließverhalten von Dickstoff, insbesondere von Beton, so bestimmt werden kann, dass sich der in einem Rohrleitungssystem benötigte Förderdruck zuverlässig abschätzen lässt.

Weiter liegt der Erfindung die Aufgabe zugrunde, eine einfach aufgebaute und für den mobilen Einsatz geeignete Vorrichtung bereitzustellen, mittels der für ein gegebenes Rohrleitungssystem, für einen bestimmten Dickstoff, der gefördert werden soll, und für eine gewünschte Fördermenge $Q$ von Dickstoff pro Zeiteinheit, der Druck $P_{FW}$ abgeschätzt werden kann, den eine Dickstoffpumpe erzeugen muss, um den im Rohrleitungssystem auftretenden Förderwiderstand zu überwinden. Darüber hinaus liegt der Erfindung die Aufgabe zugrunde, ein Verfahren zu schaffen, mittels dessen der entsprechende Druck $P_{FW}$ am konkreten Einsatzort einer Dickstoffpumpe oder im Labor auf einfache Weise schnell und mit geringem Aufwand ermittelt werden kann.

Diese Aufgabe wird durch ein Rheometer mit den Merkmalen des Anspruchs 1, eine Vorrichtung mit den Merkmalen des Anspruchs 14 und ein Verfahren mit den Merkmalen des Anspruchs 15 gelöst.

Eine Erkenntnis der Erfindung ist, dass so das Fließverhalten von Dickstoffen in einem Rohrleitungssystem gemessen werden kann, für die keine lineare Beziehung zwischen den Druck $P_{FW}$ zur Überwindung des Förderwiderstands und der Fördermenge $Q$ besteht.

Im Bezug auf einige nicht-thixotrope Dickstoffe, wie z.B. Beton, besteht eine Erkenntnis der Erfindung darin, dass bei laminarer Strömung in einem gerade verlaufenden Rohrleitungsabschnitt $i$ mit der Länge $L_i$ und dem Durchmesser $D_i$ zwischen dem Druckabfall $P_i$, der durch den Förderwiderstand des Dickstoffs im Rohrleitungsabschnitt $i$ hervorgerufen wird, und der Fördermenge $Q$ von Dickstoff pro Zeiteinheit durch den Rohrleitungsabschnitt $i$ unabhängig von der Zusammensetzung des Dickstoffs folgende Beziehung besteht:

$$P_i = \tau_{DS}\frac{L_i}{D_i} + b_{DS}\frac{L_i}{D_i^{\alpha_{DS}}}Q,\qquad\qquad (3)$$

wobei die Gleichungsparameter $\tau_{DS}$ und $b_{DS}$ und die Potenz $\alpha_{DS}$ zwar von der Art des Dickstoffs abhängen, jedoch eine Invarianz gegenüber üblichen Rohrwandungsbeschaffenheiten aufweisen und insbesondere von der Größe der Fördermenge $Q$ unabhängig sind.

Eine weitere Erkenntnis besteht darin, dass bei der Förderung von nicht-thixotropen Dickstoffen durch einen geraden Rohrleitungsabschnitt oder durch einen Rohrleitungsabschnitt $j$, der ein Reduzierstück zur Verjüngung des wirksamen Durchmessers der Rohrleitung aufweist, oder durch einen Rohrleitungsabschnitt, in dem ein Bogenstück vorgesehen ist, etwa ein 90°-Bogen oder ein 180°-Bogen, zwischen dem Druck für die Überwindung des Förderwiderstandes $P_j$ im Rohrleitungsabschnitt $j$ und der Fördermenge $Q$ unabhängig von der Zusammensetzung des Dickstoffs bei bestimmten, nicht-thixotropen Dickstoffen, wie z.B. Beton, folgende Beziehung besteht:

$$P_j = A_j + B_j Q,\qquad\qquad (4)$$

wobei die Parameter $A_j$ und $B_j$ zwar von der Art des geförderten Dickstoffs und der Geometrie des entsprechenden Rohrleitungsabschnitts $j$ abhängen, jedoch von der durch den Rohrleitungsabschnitt $j$ geförderten Fördermenge $Q$ näherungsweise unabhängig sind.

Weiter liegt der erfindungsgemäßen Lösung die Erkenntnis zugrunde, dass beim Fördern von Dickstoff durch ein Rohrleitungssystem, das sich aus Rohrleitungsabschnitten $i$ der Länge $L_i$ und dem Durchmesser $D_i$ sowie Rohrleitungsabschnitten $j$ zusammensetzt, in denen Verjüngungen und Bogenstücke ausgebildet sind, zur Überwindung des Förderwiderstandes der Druck

$$P_{FW} = \sum_i P_i + \sum_j P_j \qquad\qquad (5)$$

erzeugt werden muss, wobei für $P_i$ und $P_j$ die Gleichungen (3) und (4) gelten.

Insbesondere liegt der erfindungsgemäßen Lösung die Erkenntnis zugrunde, dass durch Einstellen einer Relativbewegung einer Dickstoffsäule, die in einem Rohrstücknormal aufgenommen ist, zu dem Rohrstücknormal, indem das Rohrstücknormal gegenüber der Dickstoffsäule bewegt wird und dabei die Dickstoffsäule stationär bleibt, das Fließverhalten des Dickstoffs in einem Rohrleitungssystem zutreffend simuliert werden kann: Über eine einfache Druckmessung bei unterschiedlichen Relativgeschwindigkeitsverläufen lässt sich korrekt auf das Fließverhalten des Dickstoffs in dem Rohrleitungssystem schließen. Eine Erkenntnis der Erfindung liegt auch darin, dass das Rohrstücknormal vergleichsweise kurz sein kann: Mit dem Rohrstücknormal von beispielsweise 1 m Länge, das sich zur Aufnahme von einer 50 cm hohen Dickstoffsäule eignet, lässt sich das Fließverhalten von Dickstoff in einem Rohrleitungssystem, das auch mehrere hundert Meter lang sein kann, richtig abschätzen.

Demgemäß schlägt die Erfindung zum einen ein insbesondere für den Labor- und Baustelleneinsatz geeignetes Rheometer vor, mit dem dessen für einen gegebenen Dickstoff der zur Überwindung des Förderwiderstands in einem Rohrstücknormal erforderliche Förderdruck $P_{FW}$ für eine gegebene Fördermenge $Q$ von Dickstoff direkt gemessen werden kann, und gibt eine einfach handhabbare Vorrichtung und ein einfach handhabbares Verfahren an, mittels dessen der aufzubringende Förderdruck $P_{FW}$ zuverlässig abgeschätzt werden kann, um einen bestimmten Dickstoff mit der Fördermenge Q durch ein Rohrleitungssystem zu fördern.

Eine Besonderheit der Erfindung besteht darin, dass als Einrichtung zum Erzeugen einer Relativbewegung von Rohrstücknormal und Dickstoff ein auf den Dickstoff im Rohrstücknormal wirkender Kolben vorgesehen ist, wobei das Rohrstücknormal relativ zu dem Kolben bewegbar angeordnet ist. Dies ermöglicht eine einfache und robuste Bauform der Rheometer.

Eine bevorzugte Ausgestaltung der Erfindung sieht vor, dass das Rohrstücknormal für eine geradlinige Bewegung von einer ersten in mindestens eine weitere Position zwangsgeführt ist. Vorteilhafterweise umfasst das Rheometer einen Verriegelungsmechanismus, um das Rohrstücknormal in einer ersten und/oder zweiten Position festzulegen. Vorteilhafterweise ist zur Aufnahme von Rohrstücknormal und Kolben eine Trägereinheit vorgesehen. Es ist günstig, den Kolben der Vorrichtung an der Trägereinheit unbeweglich, d.h. stationär anzuordnen.

Eine bevorzugte Ausgestaltung der Erfindung besteht darin, dass für das Bestimmen des durch die Relativbewegung von Dickstoff und Rohrstücknormal auf den Dickstoff wirkenden Drucks ein an dem Kolben angeordneter Drucksensor oder ein in den Kolben integrierter Kraftsensor vorgesehen ist.

Indem für das Hervorrufen einer Relativbewegung von Rohrstücknormal und Kolben ein Mittel zum Erzeugen einer Antriebskraft vorgesehen ist, können auch Dickstoffe mit großem innerem Verformungswiderstand untersucht werden. Hier ist es günstig, das Mittel zum Erzeugen einer Antriebskraft für das Erzeugen von unterschiedlich großen Antriebskräften auszulegen. Insbesondere kann dieses Mittel auch einen Antriebszylinder, etwa einen mittels Hydraulik betätigten Antriebszylinder umfassen. Ein besonders einfaches Mittel zum Erzeugen einer entsprechenden Antriebskraft besteht in einem Lastgewicht. Wenn das Lastgewicht veränderbar ausgeführt wird, lassen sich durch Variieren des Lastgewichts unterschiedliche Relativbewegungsverläufe von Rohrstücknormal und Dickstoff einstellen.

Eine besondere Ausführungsform der Erfindung sieht vor, an dem Rohrstücknormal eine Reduzierung des Innendurchmessers auszubilden oder einen Bogenabschnitt vorzusehen. Auf diese Weise kann für einen bestimmten Dickstoff der Förderwiderstand von Reduzierstücken und Bogenstücken in einem Rohrleitungssystem ermittelt werden.

Damit eine Bedienperson das Fließverhalten des Dickstoffs in der Messeinrichtung kontrollieren kann, ist es vorteilhaft, das Rohrstücknormal wenigstens teilweise aus durchsichtigem Kunststoff auszuführen.

Es ist günstig, für das Rohrstücknormal einen ersten und einen zweiten sowie gegebenenfalls auch weitere Rohrabschnitte vorzusehen, die miteinander verbunden oder voneinander getrennt werden können. Auf diese Weise wird ein einfaches Befüllen und Entleeren des Rheometers ermöglicht.

Wenn an dem Rohrstücknormal wenigstens ein Handgriff ausgebildet ist, wird eine bequeme manuelle Betätigbarkeit des Rheometers gewährleistet. Insbesondere wird so auch das manuelle Erzeugen einer Antriebskraft ermöglicht, um das Rohrstücknormal relativ zu dem Kolben zu bewegen. Indem eine Einrichtung für das Beaufschlagen von in dem Rohrstücknormal aufgenommenen Dickstoff mit einem statischen Druck vorgesehen ist, lässt sich das Fließverhalten von Dickstoff unter Drucklast bestimmen.

Im Folgenden wird die Erfindung anhand der in der Zeichnung dargestellten Ausführungsbeispiele näher erläutert.

Es zeigen:

Fig. 1a    und b eine erste und zweite perspektivische Ansicht eines ersten Rheometers in einer ersten Einstellung;

Fig. 2    einen Schnitt des ersten Rheometers in einer zweiten Einstellung;

Fig. 3a    bis f schematische Ansichten des ersten Rheometers zur Erläuterung eines Messvorgangs;

Fig. 4    eine schematische Ansicht eines zweiten, modifizierten Rheometers;

Fig. 5    eine schematische Ansicht eines dritten, modifizierten Rheometers;

Fig. 6    eine schematische Ansicht eines vierten, modifizierten Rheometers;

Fig. 7    eine schematische Ansicht eines fünften, modifizierten Rheometers;

Fig. 8    einen Verlauf von Druck- und Geschwindigkeit in einem Rheometer;

Fig. 9    eine schematische Ansicht eines sechsten, modifizierten Rheometers; und

Fig. 10    eine Vorrichtung zur Abschätzung des Förderwiderstands von Dickstoffen in einem Rohrleitungssystem.

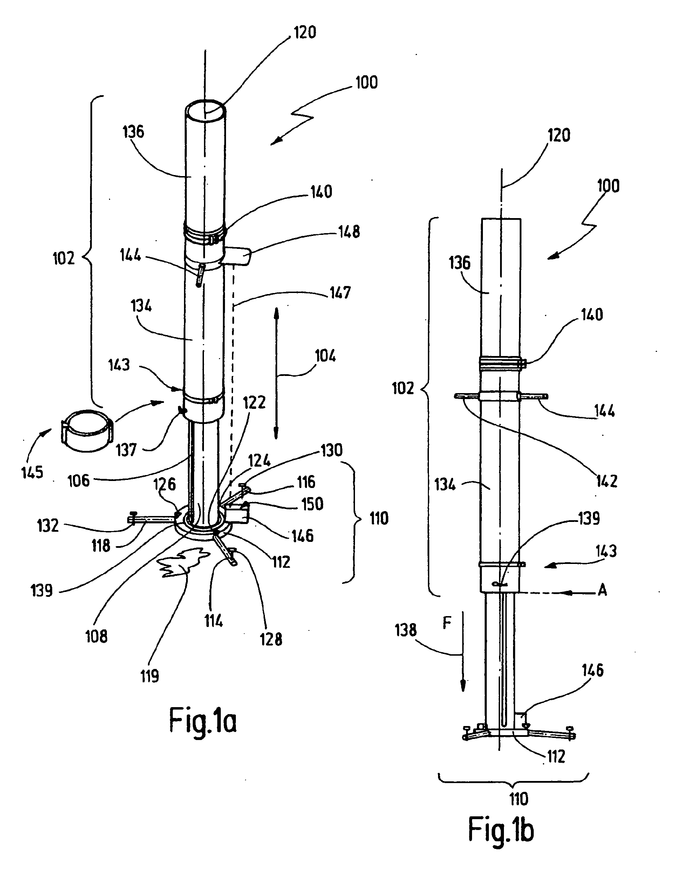

Das in Fig. 1a und b gezeigte Rheometer 100 umfasst als Behälter für Dickstoff ein mit Dickstoff befüllbares Rohrstücknormal 102. Dem Rohrstücknormal 102 ist ein Kolben 108 zugeordnet, der in das Rohrstücknormal 102 ragt. Zu der dem Kolben 108 gegenüberliegenden Seite ist das Rohrstücknormal 102 einseitig geöffnet. Das Rohrstücknormal 102 kann relativ zu dem Kolben 108 mit einer geradlinigen Bewegung entsprechend dem Doppelpfeil 104 bewegt werden. Hierzu ist das Rohrstücknormal 102 in einer Zwangsführung 106 an dem in das Rohrstücknormal 102 ragenden Kolben 108 parallel geführt. Um dabei den Kolben 108 und einen Dickstoff, der in das Rohrstücknormal 102 gefüllt ist, beobachten zu können, besteht das Rohrstücknormal 102 vorzugsweise aus durchsichtigem Material, z.B. aus durchsichtigem Kunststoff.

Der Kolben 108 ist an einer justierbaren Trägereinheit 110 stationär festgelegt. Die Trägereinheit 110 umfasst eine Trägerplatte 112, an welcher drei einstellbare Standfüße 114, 116, 118 ausgebildet sind, welche dazu dienen, die Vorrichtung auf dem Boden 119, gegebenenfalls auch im Erdbereich auf einer Baustelle abzustützen.

Die Trägereinheit 110 ermöglicht ein vertikales, d.h. lotrechtes Ausrichten der Achse 120 von Rohrstücknormal 102 und Kolben 108. Hierzu sind die drei Standfüße 114,116,118 mittels Flügelschrauben 122,124,126 in Bohrungen an der Trägerplatte 112 gehalten, welche in Bezug auf die Achse 120 von Rohrstücknormal 102 und Kolben 108 schräg nach unten zum Boden 119 weisen. An den Enden der Standfüße sind verstellbare Flügelschrauben 128,130,132 vorgesehen. Mittels der Flügelschrauben 128,130,132 kann die Achse 120 von Rohrstücknormal 102 und Kolben 108 vertikal ausgerichtet werden.

Das Rohrstücknormal 102 ist zweiteilig ausgeführt. Es hat eine Einheit 134 und eine Rohrstückeinheit 136. Die Rohrstückeinheit 136 und die Einheit 134 sind mittels eines Anschlussmechanismus 140 verbunden. Der Anschlussmechanismus 140 lässt sich schnell öffnen und schließen. Dies ermöglicht es, die Rohrstückeinheit 136 von der Einheit 134 des Rohrstücknormals 102 abzunehmen bzw. diese an die Einheit 134 aufzusetzen. Bei abgenommener Rohrstückeinheit 136 kann das Rohrstücknormal 102 von einer Bedienperson einfach und bequem mit Dickstoff befüllt werden.

An der Einheit 134 des Rohrstücknormals 102 ist ein lösbarer Verriegelungsmechanismus 137 ausgebildet. Der Verriegelungsmechanismus 137 dient dazu, das Rohrstücknormal 102 in der in Fig. 1a und b gezeigten ersten Position A am Kolben 108 zu sichern.

Um den Förderdruck für ein Rohrleitungssystem gut abschätzen zu können, hat die Rohrstückeinheit 136 und die Einheit 134 vorzugsweise einen Rohrdurchmesser, der dem Rohrdurchmesser des Rohrleitungssystems entspricht, für das eine Abschätzung des Förderdrucks von Interesse ist.

Vorliegend haben die Rohrstückeinheit 136 und die Einheit 134 einen Rohrdurchmesser von 12,5cm. Die Länge der Einheit 134 ist so ausgeführt, dass sich über dem Kolben 108 eine 50cm hohe Dickstoffsäule befindet, wenn die Einheit 134 vollständig mit Dickstoff befüllt ist. Das Eigengewicht des Rohrstücknormals beträgt ca. 2,5kg.

Wenn der Verriegelungsmechanismus 137 gelöst wird, so wirkt die am Rohrstücknormal 102 angreifenden Gewichtskraft als Antriebskraft und bewegt dieses entsprechend dem Pfeil 138 nach unten in Richtung der Trägerplatte 112 der Trägereinheit 120. Als Endanschlag für das Rohrstücknormal 102 ist in der Trägerplatte 112 eine Nut 139 ausgebildet, welche mit einem Element zur Dämpfung eines Aufpralls des Rohrstücknormals 102 ausgelegt ist.

An der Einheit 134 ist ein erster Handgriff 142 und ein zweiter Handgriff 144 vorgesehen. Mittels der Handgriffe 142, 144 kann das Rohrstücknormal 102 durch Muskelkraft von einer Bedienperson am Kolben 108 bewegt werden, wenn der Verriegelungsmechanismus 137 geöffnet ist.

Das Rohrstücknormal 102 hat einen Aufnahmeabschnitt 143 für ein als Rohrschelle ausgebildetes Zusatzgewicht 145. Indem die Rohrschelle 145 an dem Rohrstücknormal 102 befestigt wird, ist die an dem Rohrstücknormal 102 angreifende Gewichtskraft F entsprechend dem Eigengewicht der Rohrschelle erhöht.

Das Rheometer 100 hat eine Messeinrichtung mit einer Einheit für das Bestimmen einer Relativbewegung von Dickstoff und Rohrstücknormal 102 in Form eines Laserwegaufnehmers 146. Dem Laserwegaufnehmer 146 ist eine einen Laserstrahl 147 wenigstens teilweise reflektierende Platte 148 zugeordnet, welche am Rohrstücknormal 102 befestigt ist. Mittels des Laserwegaufnehmers 146 ist es möglich, den Abstand der Platte 148 von der Stirnseite 150 des Laserwegaufnehmers 146 als Funktion der Zeit zu messen. Hierdurch kann der Laserwegaufnehmer eine momentane Bewegungsgeschwindigkeit des Rohrstücknormals 102 am Kolben 108 erfassen. Der Laserwegaufnehmer 146 ist zur Steuerung und Signalauswertung mit einer Rechnereinheit verbunden, die in Fig, 1 a und b nicht gezeigt ist.

Es sei bemerkt, dass für das Bestimmen einer Relativbewegung von Dickstoff und Rohrstücknormal anstelle eines Laserwegaufnehmers auch ein Wegaufnehmer anderer Bauart oder aber auch ein Geschwindigkeits- oder Beschleunigungsmesser eingesetzt werden kann.

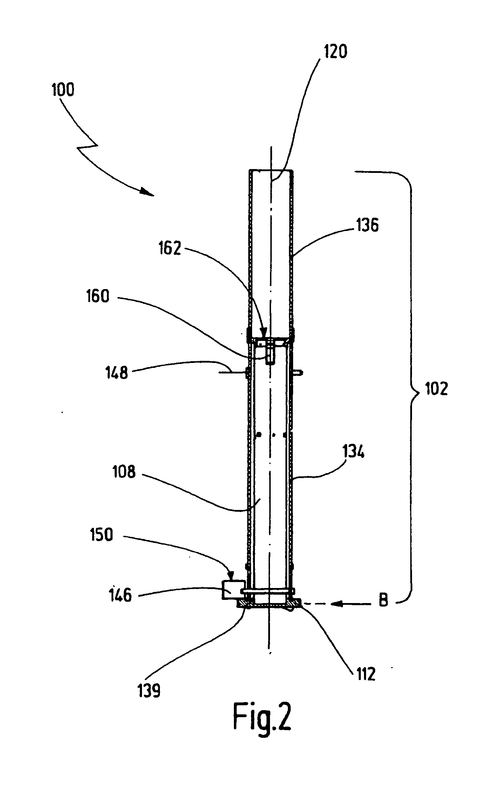

Die Fig. 2 zeigt einen Schnitt der Rheometer 100 aus Fig. 1a und b, wobei das Rohrstücknormal in eine Position B auf das Dämpfungselement in der Nut 139 der Trägerplatte 112 bewegt ist. Zur Bezeichnung gleicher Baugruppen sind in Fig. 2 die gleichen Bezugszeichen wie in Fig. 1a und b verwendet.

Weiter ist bei dem Rheometer 100 als Messeinrichtung ein als Betondrucksensor ausgeführter Drucksensor 160 vorgesehen, mittels dessen ein durch Relativbewegung von Dickstoff und Rohrstücknormal 102 auf den Dickstoff im Rohrstücknormal 102 wirkender Druck durch Erfassen einer Druckkraft bestimmt werden kann. Der Drucksensor 160 ist zentrisch an der Stirnseite 162 des Kolbens 108 aufgenommen. Er ist ebenfalls zum Zwecke der Steuerung und Signalauswertung mit der erwähnten Rechnereinheit verbunden.

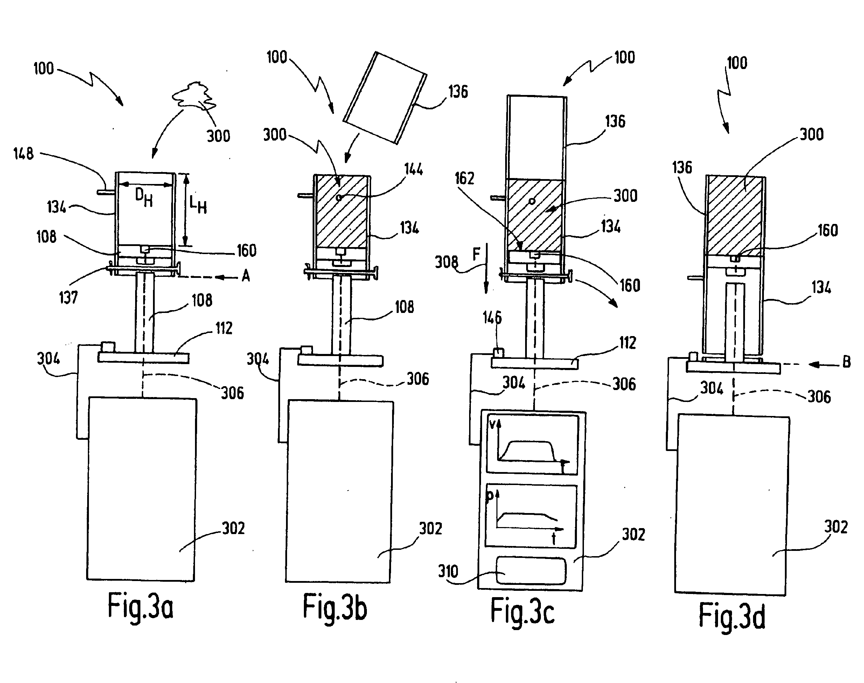

Der Betrieb des anhand von Fig. 1a und b sowie Fig. 2 beschriebenen Rheometers 100 ist anhand von Fig. 3a bis f näher beschrieben. Dabei sind die Baugruppen der Rheometer in Fig. 3a bis f lediglich schematisch gezeigt. Zur Erläuterung werden die Bezugszeichen aus Fig. 1a und b sowie Fig. 2 verwendet werden, soweit diese sich auf identische Baugruppen beziehen.

Die Fig. 3a zeigt die Rechnereinheit 302 zur Steuerung und Signalauswertung, an die Laserwegaufnehmer 146 und Drucksensor 160 mit Datenübertragungselementen 304,306 angeschlossen sind. Zum Vorbereiten des Rheometers 100 für einen Messvorgang wird zunächst die Einheit 134 des Rohrstücknormals 102 in der in Fig. 3a gezeigten Position A an dem Kolben 108 mittels des Verriegelungsmechanismus 137 verriegelt.

Anschließend wird, wie in Fig. 3b dargestellt, die Einheit 134 des Rohrstücknormals bei einem Rohrdurchmesser $D_N$ bis an die Oberkante über eine Länge $L_N$ mit einem Dickstoff 300 befüllt, dessen Förderwiderstand ermittelt werden soll.

In einem nächsten Schritt entsprechend der Fig. 3c wird dann die Rohrstückeinheit 136 auf die Einheit 134 des Rohrstücknormals 102 aufgesetzt und mit dieser verriegelt.

Mittels des am Kolben 108 angeordneten Drucksensors 160 wird zunächst bei verriegeltem Rheometer der aufgrund des Dickstoffs 300 am Kolben lastende Druck $P_M$ bestimmt.

Unter Vernachlässigung der Reibung des Dickstoffs an der Innenwandung des Rohrstücksnormals 102 ergibt sich hieraus die Masse M des im Rohrstücknormal 102 aufgenommenen Dickstoffs wie folgt:

$$M = \frac{D^2}{4g} \pi \, P_M \, , \qquad\qquad (7)$$

wobei *g* die Erdbeschleunigung und D der Innendurchmesser des Rohrstücknormals 102 ist. Damit ist mit dem Rheometer 100 auch das Bestimmen der Dichte $\rho_B$ von in das Rohrstücknormal 102 gefülltem Dickstoff möglich, denn es gilt:

$$\rho_B = \frac{M}{V} \, , \qquad\qquad (8)$$

wobei V das in das Rohrstücknormal 102 eingefüllte Dickstoffvolumen ist.

Darauf wird der Verriegelungsmechanismus 137 gelöst. Die Folge ist, dass aufgrund der Schwerkraft F, die in Richtung des Pfeils 308 wirkt, das Rohrstücknormal 102 zur Trägerplatte 112 hin bewegt wird. Das Rohrstücknormal 102 wird durch die Schwerkraft F auf eine reibungsbedingte Grenzgeschwindigkeit $v_{G1}$ beschleunigt. Sie senkt sich dann mit dieser Geschwindigkeit $v_{G1}$ auf die Trägerplatte 112. Dabei wird mittels des Drucksensors 160 der auf der Stirnseite 162 des Kolbens 108 von dem Dickstoff 300 hervorgerufene Druck $P(t)$ und über den Laserwegaufnehmer 146 die Bewegungsgeschwindigkeit $v(t)$ des Rohrstücknormals 102 an dem Kolben 108 als Funktion der Zeit $t$ gemessen.

Die Fig. 3d zeigt das mit Dickstoff 300 gefüllte Rohrstücknormal in der Position B an der Trägerplatte 112.

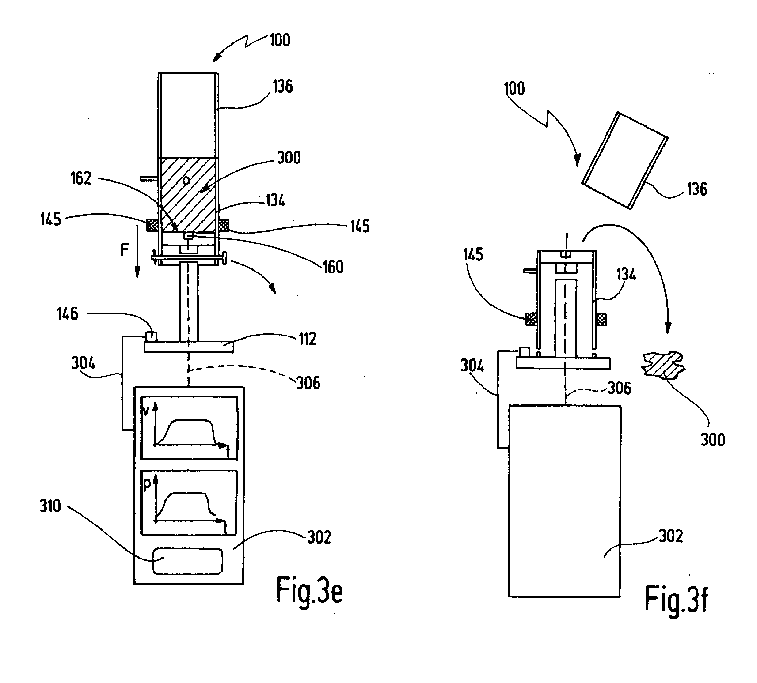

Diese Messung vom Druck $P(t)$ und Bewegungsgeschwindigkeit $v(t)$ wird, wie in Fig. 3e gezeigt, mit den für das Rohrstücknormal 102 vorgesehenen Zusatzgewicht 145 wiederholt: Das Rohrstücknormal 102 wird bei Herabsinken am Kolben 108 durch die nunmehr größere Schwerkraft auf die Grenzgeschwindigkeit $v_{G2}$ beschleunigt.

Gegebenenfalls wird hierauf das Zusatzgewicht 145 nocht weitere Male geändert, um dann entsprechende Druck- und Geschwindigkeitsvorläufe $P_n$, $v_{Gn}$ aufzunehmen.

Dann ermittelt die Rechnereinheit 302 aus den erfassten zeitlichen Verläufen für den Druck $P(t)$ und die Geschwindigkeit $v(t)$ den sich bei der Grenzgeschwindigkeit $v_{G1}$ bis $v_{Gn}$ bzw. den Fördermengen $Q_1$ bis $Q_n$ einstellenden Druck $P_1$ bis $P_n$ um mit diesen Werten ein Diagramm der Abhängigkeit von $P$ und $Q$ an der Anzeigeeinheit 310 darzustellen.

Hierfür werden in der Rechnereinheit 302 zum Gleichungssystem

$$P_1 = \tau_{DS} \frac{L_N}{D_N} + b_{DS} \frac{L_N}{D_N^{\alpha_{DS}-2}} \frac{\pi}{4} v_{G1}$$

$$\vdots \qquad\qquad (6)$$

$$P_n = \tau_{DS} \frac{L_N}{D_N} + b_{DS} \frac{L_N}{D_N^{\alpha_{DS}-2}} \frac{\pi}{4} v_{Gn}$$

die Parameter $\alpha_{DS}$ und $b_{DS}$ bestimmt und an der Anzeigeeinheit 310 der Rechnereinheit 302 zur Anzeige gebracht.

Um den Dickstoff 300 aus dem Rohrstücknormal zu entfernen, wird schließlich, wie in Fig. 3f gezeigt, die Rohrstückeinheit 136 von der Einheit 134 durch Lösen des vorgesehenen Verriegelungsmechanismus getrennt, um so den aufgenommenen Dickstoff 300 freizugeben.

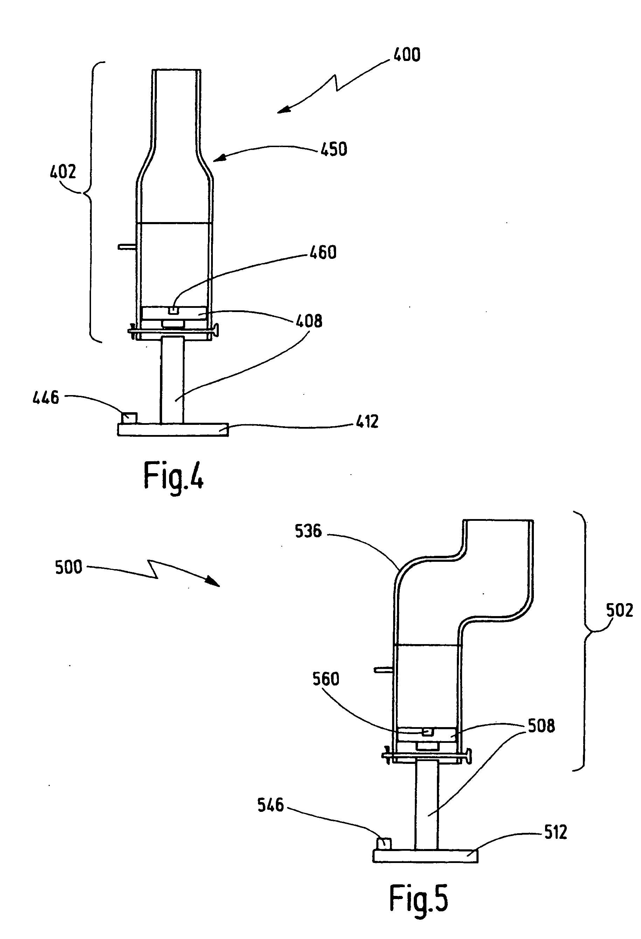

Die Fig. 4 zeigt ein Rheometer 400 mit einem Rohrstücknormal 402, in dem eine Durchmesserreduzierung 450 ausgebildet ist, um eine Abschätzung des durch ein Reduzierstück in dem Rohrleitungssystem hervorgerufenen Förderwiderstandes zu ermöglichen. Im Übrigen entspricht die Funktionsweise des Rheometers 400 derjenigen des Rheometers 100, die anhand von Fig. 1, 2 sowie der Fig. 3a-f erläutert ist. Baugruppen der Rheometer 400, die auch bei dem Rheometer 100 anzutreffen sind, haben in Bezug auf Fig. 1 und 2 als Bezugszeichen um die Zahl 300 erhöhte Bezugszahlen.

Die Fig. 5 zeigt ein Rheometer 500 mit einem Rohrstücknormal 502, in dem es ein Bogenstück 536 gibt. Das Rheometer 500 ermöglicht eine Abschätzung des Förderwiderstands, der durch ein entsprechendes Bogenstück in einem Rohrleitungssystem für Dickstoffe hervorgerufen wird. Im Übrigen entspricht die Funktionsweise des Rheometers 500 derjenigen des Rheometers aus Fig. 4, und entsprechend identische Baugruppen sind in Fig. 5 mit um die Zahl 100 erhöhten Bezugszahlen kenntlich gemacht.

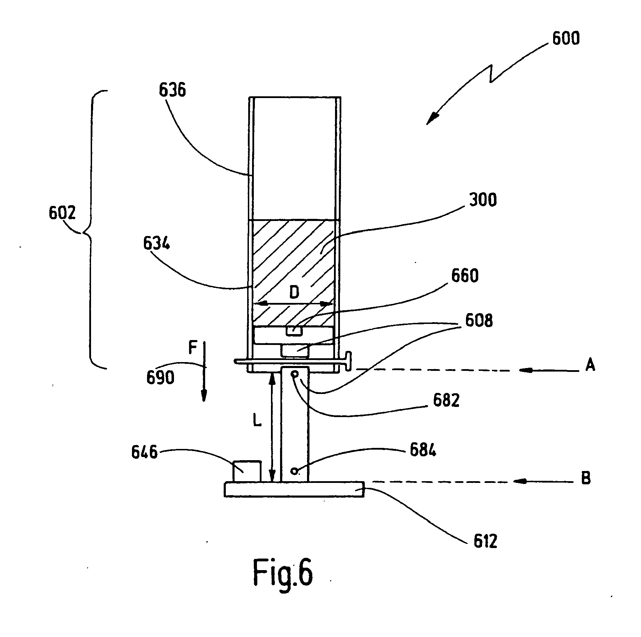

Die Fig. 6 zeigt ein Rheometer 600, bei dem als Einheit für das Bestimmen einer Geschwindigkeit der relativen Bewegung von Dickstoff 300 und Rohrstücknormal 602 kein Laserwegaufnehmer, sondern ein Zeitmessgerät 646 vorgesehen ist. Der grundsätzliche Aufbau des Rheometers 600 entspricht dabei dem Aufbau des anhand von Fig. 1, 2 sowie Fig. 3a-f erläuterten Rheometers 100. Soweit die Baugruppen des Rheometers 600 denjenigen des Rheometers 100 entsprechen, sind diese durch um die Zahl 500 erhöhten Bezugszeichen endlich gemacht. Dem Zeitmessgerät 646 sind Steuerschalter 682, 684 zugeordnet, die bei einer Bewegung des Rohrstücknormals 602 entsprechend dem Pfeil 690 aus der Verriegelungsposition A in die Position B entlang des Kolbens 608 geschaltet werden, um so die Zeitdauer $\Delta t$ der Bewegung des Rohrstücknormals aus der Position A in die Position B zu bestimmen.

Das Rheometer 600 wird wie folgt betrieben:

Mit dem Lösen des Verrriegelungsmechanismus 637 gleitet das mit Dickstoff 300 gefüllte Rohrstücknormal am Kolben 608 herab. Dabei wird mittels des Drucksensors 660 der auf dem Kolben 608 lastende Druck $P$ über die Zeit $t$ gemessen und mit dem Zeitmessgerät 646 die Zeitdauer $\Delta t$ für diese Bewegung bestimmt. Das Rohrstücknormal 608 wird dabei durch die Gewichtskraft auf eine Grenzgeschwindigkeit $v_G$ beschleunigt.

Unter Umsetzung der eingangs erwähnten Erkenntnis, dass bei der Förderung der Fördermenge $Q$ von einigen nicht-thixotropen Dickstoffen mit laminarer Strömung durch einen Rohrleitungsabschnitt $j$ , der für eine Überwindung des Förderwiderstandes aufzubringende Förderdrucks $P_{FW}$ unabhängig von der Zusammensetzung des Dickstoffs folgender Beziehung genügt:

$$P_{FW}(j) = A_j + B_j Q , \qquad (9)$$

gilt für den vom Drucksensor 660 aufgenommenen Druck $P$ als Funktion der Zeit $t$ :

$$P(t) = \frac{Mg}{\frac{D^2}{4}\pi} - P_{FW}(t) = \frac{4g}{\pi}\frac{M}{D^2} - \left\{ A_j + B_j \frac{D^2}{4}\pi\ v(t) \right\}, \qquad (10)$$

wobei $v(t)$ die momentane Geschwindigkeit des Rohrstücknormals 602 ist, mit der dieses an Kolben 608 entlang gleitet. Damit lässt sich die gemessene Gesamtdauer $\Delta t$ der Bewegung in diese entsprechende Grenzgeschwindigkeit $v_G$ umrechnen.

Indem unter Verwendung eines zusätzlichen Lastgewichts der sich bei zwei unterschiedlichen Grenzgeschwindigkeiten einstellende Druck $P(t)$ vermessen wird, kann aus der Gleichung (10) auf die vom Dickstoff abhängigen Parameter $A_j$, $B_j$ geschlossen werden.

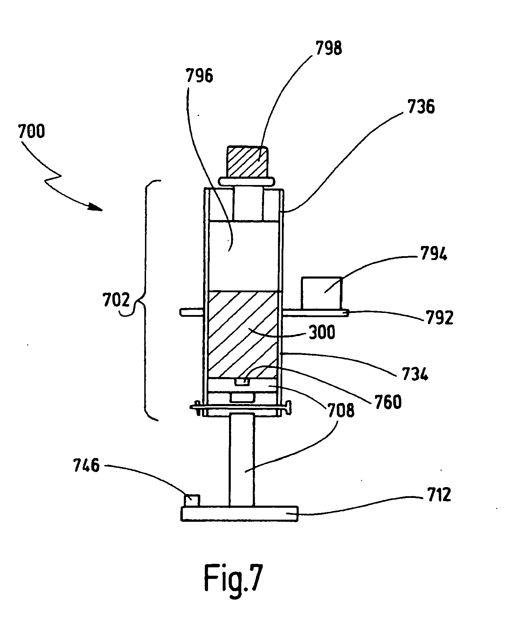

Die Fig. 7 zeigt ein Rheometer 700, das entsprechend dem Rheometer 100 aus Fig. 1 und 2 sowie Fig. 3a-f aufgebaut ist. Im Bezug auf das Rheometer 100 aus Fig. 1 identische Baugruppen sind bei dem Rheometer 700 mit um die Zahl 600 erhöhten Bezugszahlen bezeichnet. Das Rheometer 700 hat eine Aufnahmeeinheit 792 für ein Lastgewicht 794. Es unterscheidet sich von dem Rheometer 100 aus Fig. 1 darin, dass in dem Rohrstücknormal 702 ein zusätzlicher Kolben 796 mit einem Lastgewicht 798 vorgesehen ist, um den Dickstoff 300 in dem Rohrstücknormal mit einem zusätzlichen Druck zu beaufschlagen. Dies ermöglicht es, das Fliessverhalten von Dickstoff zu untersuchen, der mit Druck beaufschlagt ist.

Es sei bemerkt, dass in den anhand von Fig. 1 bis 7 beschriebenen Rheometern als Einheit für das Bestimmen einer durch die Relativbewegung von Dickstoff und Rohrstücknormal auf den Dickstoff wirkenden Drucks auch eine Geschwindigkeits- oder Zeitmesseinrichtung mit entsprechender Recheneinrichtung vorgesehen sein kann: Ist nämlich das Eigengewicht $M$ des gegebenenfalls mit einem Lastgewicht beschwerten Rohrstücknormals sowie die insbesondere durch eine Dichtung am Kolbenrand bedingte Reibungskraft $F_{RK}$ zwischen dem Kolben und dem Rohrstücknormal hinreichend gut bekannt, so lässt sich für den Fall der stationären Bewegung des Rohrstücknormals mit der Grenzgeschwindigkeit $v_G$ der durch die Relativbewegung des Rohrstücknormals auf den Dickstoff wirkenden Druck $P$ wie folgt berechnen:

$$P = \frac{gM - F_{RK}}{\frac{D^2}{4}\pi}, \qquad (11)$$

wobei $g$ die Erdbeschleunigung und $D$ der Durchmesser des Rohrstücknormals ist.

Die Masse $M$ von Rohrstücknormal und Lastgewicht kann beispielsweise mit einer Waage unabhängig vom rheometrischen Messablauf bestimmt werden.

Die Reibungskraft $F_{RK}$ lässt sich bei leerem Rohrstücknormal messen, indem die für eine freie Abwärtsbewegung erforderliche Masse des Rohrstücknormals bzw. die damit verbundene Gewichtskraft ermittelt wird. Alternativ dazu ist auch das Bestimmen der Reibungskraft über einen am Kolben angeordneten Drucksensor möglich, nämlich indem der gemessene dynamische Druck mit einem theoretisch erwarteten Druck verglichen wird, der sich unter Vernachlässigung der Reibungskraft an der Oberfläche der Kolbens ausbilden würde.

Dass heißt, dass sich auf den Druck $P$, der auf den Dickstoff im Rohrstücknormal wirkt, schließen lässt, wenn sich das Rohrstücknormal mit der Grenzgeschwindigkeit $v_G$ bei stationärer Bewegung am Kolben abwärts bewegt. Ob sich das Rohrstücknormal mit der Grenzgeschwindigkeit $v_G$ bewegt lässt sich z.B. über eine Geschwindigkeits- oder Zeitmessung ermitteln.

Weiter ist es möglich, bei den anhand von Fig. 1 bis 7 beschriebenen Rheometern als Einheit für das Bestimmen einer Geschwindigkeit der Relativbewegung von Dickstoff und Rohrstücknormal eine Druckmesseinrichtung mit Recheneinheit vorzusehen.

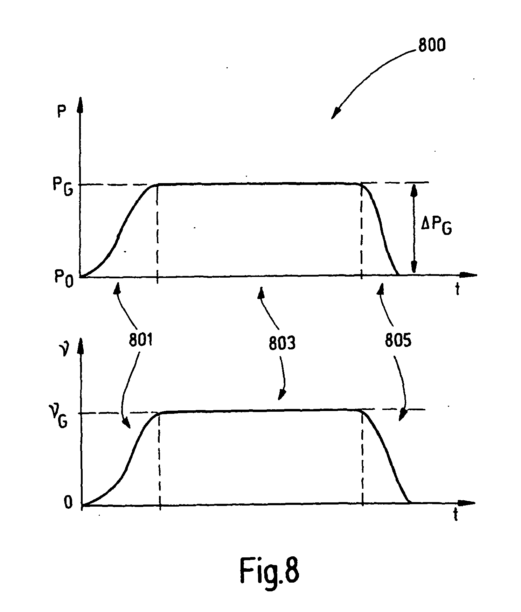

Die Fig. 8 zeigt mit einem Diagramm 800 einen typischen Verlauf von Druck $P$ und der Geschwindigkeit $v$, der sich für den Dickstoff Beton beim Herabgleiten des Rohrstücknormals am Kolben ergibt:

Der Druck $P$ steigt zunächst im Bereich 801, weil auf den Grenzdruck $P_G$ an, bis das Rohrstücknormal die Grenzgeschwindigkeit $v_G$ aufgenommen hat. Im Bereich 803 ist der Druck $P$ in etwa konstant. $P$ fällt im Bereich 805 abrupt ab. Die Geschwindigkeit $v$ steigt entsprechend auf eine Grenzgeschwindigkeit $v_G$ an und ist darauf solange konstant, bis das Rohrstücknormal abrupt abgebremst wird.

Demnach besteht idealisiert der folgende lineare Zusammenhang zwischen der Änderung des Drucks $\Delta P$ und $v$ :

$$v = k\Delta P \qquad (12)$$

Dabei ist

$$k = \frac{v_G}{\Delta P_G} \qquad (13)$$

eine Apparatekonstante, die nur von der Bauform des Rheometers abhängt. Dies ermöglicht es, aus einem am Kolben des Rheometers erfassten Druck $P$ auf die Geschwindigkeit $v$ zu schließen, mit der das Rohrstücknormal am Kolben entlanggleitet.

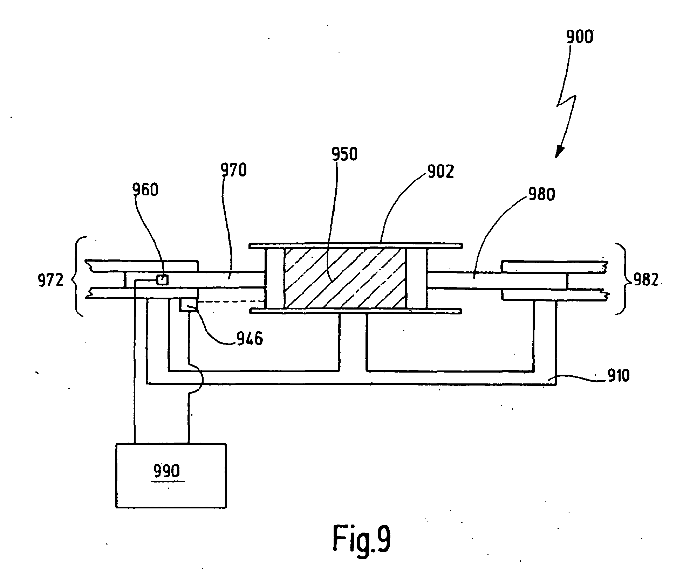

Die Fig. 9 zeigt ein Rheometer 900 mit einem Rohrstücknormal 902 und einem ersten und einem zweiten hydraulisch betätigbaren Kolben 970, 980 mit hydraulischen Antriebszylindern 972, 982, die auf ein Dickstoffvolumen 950 in einem auf einer Trägereinheit 910 angeordneten Rohrstücknormal 902 wirken.

Mittels des Kolbens 970 ist es möglich, eine Antriebskraft F zum Hervorrufen einer Relativbewegung von Dickstoff und Rohrstücknormal 902 einzustellen, welche mittels eines geeigneten Geschwindigkeitsaufnehmers 946 gemessen werden kann. Zur Messung des auf den Kolben 970 lastenden Drucks gibt es am Kolben 970 einen Kraftsensor 960. Der Geschwindigkeitsaufnehmer 946 und der Kraftsensor 960 sind zum Zweck der Steuerung und Signalauswertung mit einer Rechnereinheit 990 verbunden.

Der Kolben 980 dient dazu, den Dickstoff im Rohrstücknormal 902 mit einem zusätzlichen Lastdruck zu beaufschlagen. Auf diese Weise kann wiederum durch Bestimmen der Relativgeschwindigkeit des im Rohrstücknormal aufgenommenen Dickstoffs im Bezug auf den Kolben 970 bei gleichzeitigem Messen des an dem Kolben 970 lastenden Drucks das Fließverhalten von Dickstoff bei einem einsprechend einstellbaren Basisdruck ermittelt werden.

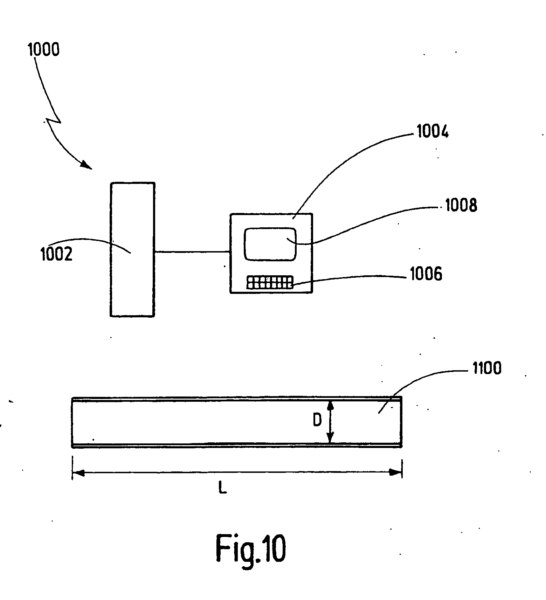

Die Fig. 10 zeigt eine Vorrichtung 1000 zur Abschätzung des zur Überwindung des Förderwiderstandes von Dickstoffen in einer Rohrleitung 1100 der Länge $L$ und Durchmesser $D$ benötigten Förderdrucks $P_{FW}$ bei einer vorgegebenen Fördermenge $Q$ von Dickstoff.

Die Vorrichtung 1000 einhält ein Rheometer 1002 mit einer Bauform, die derjenigen der anhand von Fig. 1 bis 9 beschriebenen Rheometer entspricht. Dies ermöglicht eine quantifizierte Bestimmung des Fließverhaltens von Dickstoff durch ermitteln der Parameter $\tau_{DS}$ und $b_{DS}$ von Gleichung (3).

Die Vorrichtung 1000 einhält eine Rechnereinheit 1004, die mit dem Rheometer 1002 verbunden ist. Die Rechnereinheit 1004 hat eine Dateneingabeeinheit 1006 und eine Monitoreinheit 1008. Die Dateneingabeeinheit 1006 dient zur Eingabe von Durchmesser $D$ und Länge $L$ einer Rohrleitung, für die ein Förderdruck $P_{FW}$ zur Überwindung des Förderwiderstands abgeschätzt werden soll, sowie der gewünschten Fördermenge $Q$ von Dickstoff. Die Rechnereinheit 1004 enthält ein Programm, um z.B. auf Grundlage der Gleichungen (3) bis (5) den erforderlichen Druck $P_{FW}$ nach folgender Beziehung zu berechnen:

$$P_{FW} = \frac{\tau_B}{D} L + \frac{b_B}{D^3} LQ \,. \qquad (17),$$

um dann an der Monitoreinheit 1008 den Parameter $\tau_B$, dem die physikalische Bedeutung der Fließgrenze zukommt, und den Parameter $b_B$, bei dem es sich um die Viskosität des Dickstoffs handelt, anzuzeigen.

Zusammenfassend ist folgendes festzuhalten: Die Erfindung bezieht sich auf ein Rheometer 100 für Dickstoffe sowie auf eine Vorrichtung und ein Verfahren zur Abschätzung des für die Überwindung des Förderwiderstands von Dickstoff in einer Rohrleitung aufzubringenden Förderdrucks mit einem solchen Rheometer 100. Das Rheometer 100 hat einen Behälter zur Aufnahme von Dickstoff und eine Messeinrichtung für das Fließverhalten von Dickstoff in dem Behälter. Der Behälter ist als ein mit Dickstoff 300 befüllbares Rohrstücknormal 102 ausgebildet. Bei dem Rheometer 100 kann eine lineare Relativbewegung von Rohrstücknormal 102 und in das Rohrstücknormal 102 gefülltem Dickstoff 300 mit einer ersten Geschwindigkeit und mit mindestens einer von der ersten Geschwindigkeit verschiedenen weiteren Geschwindigkeit bewirkt werden. Als Messeinrichtung ist eine Einheit 146,147,148 für das Bestimmen einer Geschwindigkeit $\nu$ der Relativbewegung von Dickstoff 300 und Rohrstücknormal 102 und eine Einheit 160 für das Bestimmen eines durch die Relativbewegung von Dickstoff 300 und Rohrstücknormal 102 auf den Dickstoff 300 wirkenden Drucks $P$ vorgesehen.

## Patentansprüche

1. Rheometer (100,400,500,600,700,900) für Dickstoffe
mit einem Behälter zur Aufnahme von Dickstoff (300); und
mit einer Messeinrichtung;
**dadurch gekennzeichnet, dass**
der Behälter ein mit Dickstoff (300) befüllbares *Rohrstück* (102,402,502,602,702,902) mit einem relativ zu dem *Rohrstück* (102,402,502,602,702,902) bewegbaren Kolben (108,970) *umfasst*;
wobei
die Messeinrichtung eine Einheit (146,147,148,646,682,684,946) für das *Ermitteln* einer Geschwindigkeit ($\nu$) der Relativbewegung von Kolben (108,970) und Rohrstück (102,402,502,602,702,902) *enthält*; sowie
eine Einheit (160,660,960) für das *Ermitteln eines von in das Rohrstück (102, 402, 502, 602, 702, 902) gefülltem Dickstoff (300) auf den Kolben (108,970) ausgeübten* Drucks ($P$) aufweist, und
*eine Berechnungseinheit (302, 990) vorgesehen ist, die eine Berechnung des Fließverhaltens von Dickstoff (300) in dem Behälter ausgehend von ermittelten Geschwindigkeiten und Druckwerten durchführt.*

2. Rheometer nach Anspruch 1, **dadurch gekennzeichnet, dass** für das *Rohrstück* (102) eine Zwangsführung (106) für eine geradlinige Bewegung des *Rohrstücks* (102) von einer ersten Position (A) in eine zweite Position (B) und/ oder eine weitere Position vorgesehen ist.

3. Rheometer nach Anspruch 2, **dadurch gekennzeichnet, dass** ein Verriegelungsmechanismus (136) vorgesehen ist, um das *Rohrstück* (102) in der ersten und/oder in einer weiteren Position (A,B) festzulegen.

4. Rheometer nach Anspruch 3, **dadurch gekennzeichnet, dass** zur Aufnahme von *Rohrstück* (102,902) und Kolben (108,970) eine *für das vertikale Ausrichten des Rohrstücks (102) justierbare* Trägereinheit (110,910) vorgesehen ist, *an welcher der Kolben (108) stationär angeordnet ist.*

5. Rheometer nach einem der Ansprüche 1 bis 4, **dadurch gekennzeichnet, dass** die Einheit für das Bestimmen des durch die Relativbewegung von Dickstoff (300) und *Rohrstück* (102.902) auf den Dickstoff (300) wirkenden Drucks ($P$) einen an dem Kolben (108) aufgenommenen Drucksensor (160) oder einen an dem Kolben (970) aufgenommenen Kraftsensor (960) umfasst.

6. Rheometer nach einem der Ansprüche 1 bis 5, **dadurch gekennzeichnet, dass** die Einheit zum Erzeugen einer Relativbewegung von *Rohrstück* (102,702,902) und Kolben (108,708,908) ein Mittel (792,794,796,970,980) zum Erzeugen einer auf das *Rohrstück* (102,702) wirkenden Antriebskraft (F) aufweist, *welches vorzugsweise für das Erzeugen von unterschiedlich großen Antriebskräften ausgelegt ist.*

7. Rheometer nach Anspruch 6, **dadurch gekennzeichnet, dass** als Mittel zum Erzeugen einer Antriebskraft ein *vorzugsweise veränderbares* Lastgewicht (794,796) vorgesehen ist

8. Rheometer nach Anspruch 1, **dadurch gekennzeichnet, dass** zum Erzeugen einer Relativbewegung von *Rohrstück* (102.802) und Dickstoff (300) ein auf den Dickstoff (300) im *Rohrstück* (102) wirkender Kolben (108,970) vorgesehen ist, wobei der Kolben (970) relativ zu dem Rohrstück (902) bewegbar angeordnet ist

9. Rheometer nach Anspruch 8, **dadurch gekennzeichnet, dass** zum Erzeugen einer Relativbewegung von *Rohrstück* (102,702,802) und Kolben (108,708,908) ein Mittel (792,794,796,970,980) zum Erzeugen einer auf den Kolben (970) wirkenden Antriebskraft (F) vorgesehen ist.

10. Rheometer nach einem der Ansprüche 1 bis 9, **dadurch gekennzeichnet, dass** an dem *Rohrstück* (402) eine Reduzierung des Innendurchmessers oder an dem *Rohrstück* (502) ein Bogenabschnitt ausgebildet ist.

11. Rheometer nach einem der Ansprüche 1 bis 10, **dadurch gekennzeichnet, dass** das *Rohrstück* (102) wenigstens teilweise aus durchsichtigem Material, insbesondere aus durchsichtigem Kunststoff besteht.

12. Rheometer nach einem der Ansprüche 1 bis 11, **dadurch gekennzeichnet, dass** das *Rohrstück* (102) einen ersten und einen zweiten Rohrabschnitt (134,136) umfasst, die miteinander verbunden und voneinander getrennt werden können.

13. Rheometer nach einem der Ansprüche 1 bis 12, **dadurch gekennzeichnet, dass** eine Einrichtung (796,798,980) für das Beaufschlagen von in dem *Rohrstück* (702,902) aufgenommenem Dickstoff (300) mit einem statischen Druck vorgesehen ist

14. Vorrichtung (1000) für das Bestimmen des Förderwiderstandes von Dickstoff in einem Rohrleitungssystem (1100) mit einem Rheometer (1002) gemäß einem der Ansprüche 1 bis 13.

15. Verfahren zur Abschätzung des zur Überwindung des Förderwiderstandes von Dickstoffen (300) in einer Rohrleitung aufzubringenden Förderdrucks ($P_{FW}$),
bei dem ein mit dem zu fördernden Dickstoff befülltes *Rohrstück* (102) relativ zu dem in das *Rohrstück* (102) gefüllten Dickstoff (300) bewegt *und dabei ein auf den Dickstoff wirkender Druck ermittelt* wird; und
*bei dem der* Förderwiderstand des Dickstoffs (300) *ausgehend von ermittelten Geschwindigkeiten der Relativbewegung von Dickstoff (300) und Rohrstück (102) und ausgehend von Druckwerten berechnet wird.*

16. Verfahren nach Anspruch 15, **dadurch gekennzeichnet, dass** der Wert eines auf den Dickstoff (300) wirkenden Drucks (*P*) über eine Geschwindigkeitsmessung oder eine Zeitmessung bestimmt wird.

17. Verfahren nach Anspruch 15 oder 16, **dadurch gekennzeichnet, dass** die Geschwindigkeit (v) der Relativbewegung von Dickstoff (300) und *Rohrstück* (102) über eine Druckmessung bestimmt wird.

**Claims**

1. Rheometer (100,400,500,600,700,900) for high-viscosity materials having a vessel for accommodating high-viscosity material (300); and
a measuring device;
**characterized in that**,
the vessel includes a pipe section (102,402,502,602,702,902) fillable with high-viscosity material (300) having a piston (108,970) movable relative to the pipe section (102,402,502,602,702,902);
the measuring device has a unit (146,147,148,646,682,684,946) for the determination of a velocity (v) of the relative movement of piston (108,970) and the pipe section (102,402,502,602,702,902); as well as
a unit (160,660,960) for the determination of a pressure (P) applied by high-viscosity material (300), which is filled into the pipe section (102,402,502,602,702,902) on the piston; and
a calculating unit (302,902) is provided which carries out a calculation of the flow behavior of high-viscosity material (300) in the vessel from determined velocities and pressure values.

2. Rheometer according to claim 1 or 2, **characterized in that** a constraining guide (106) is provided for the pipe section (102) for a linear movement of the pipe section (102) from a first position (A) into a second position (B) and/or a further position.

3. Rheometer according to claim 2, **characterized in that** a latching mechanism (136) is provided in order to fix the pipe section (102) in the first and/or in a further position (A,B).

4. Rheometer according to claim 3, **characterized in that** a carrier unit (110,970), which is adjustable for the vertical alignment of the pipe section (102), is provided for accommodating pipe section (102,902) and piston (108,970), the piston (108) being fixedly arranged on the carrier unit (110,970).

5. Rheometer according to one of claims 1 to 4, **characterized in that** the unit for the determination of the pressure (P), which acts on the high-viscosity material (300) via the relative movement of the high-viscosity material (300) and the pipe section (102,902), includes a pressure sensor (160), which is accommodated on the piston (108), or a force sensor (960), which is accommodated on the piston (970).

6. Rheometer according to one of the claims 1 to 5, **characterized in that** the unit for generating a relative movement of pipe section (102,702,902) and piston (108,708,908) has a means (792,794,796,970,980) for generating a drive force (F), preferably configured to generate drive forces of different magnitude and acting on the pipe section (102,702).

7. Rheometer according to claim 6, **characterized in that** a preferably adjustable load weight (794,796) is provided as a means for generating a drive force.

8. Rheometer according to claim 1, **characterized in that** for generating a relative movement of pipe section (102,802) and high-viscosity material (300) a piston (108,970) is provided, which acts on the high-viscosity material (300) in the pipe section (102), the piston (970) being arranged movable relative to the pipe section (902).

9. Rheometer according to claim 8, **characterized in that** for generating a relative movement of pipe section (102,702,802) and piston (108,708,908), a means (792,794,796,970,980) for generating a drive force (F) acting on the piston (970) is provided.

10. Rheometer according to one of the claims 1 to 9, **characterized in that** on the pipe section (402) there is formed a reduction of the inner diameter or a curved section on the pipe section (502).

11. Rheometer according to one of the claims 1 to 10, **characterized in that** the pipe section (102) at least partially comprises transparent material, especially a transparent plastic.

12. Rheometer according to one of the claims 1 to 11, **characterized in that** the pipe section (102) includes first and second pipe sections (134,136) which can be connected to each other or can be separated from each other.

13. Rheometer according to one of the claims 1 to 12, **characterized in that** an arrangement (796,798,980) for charging high-viscosity material (300) having a static pressure and being accommodated in the pipe section (702,902) is provided.

14. Arrangement (1000) for the determination of the feeding resistance of high-viscosity material in a pipeline system (1100) with a rheometer (1002) in accordance with one of the claims 1 to 13.

15. Method for estimating the feeding pressure ($P_{FW}$) which is to be developed for overcoming the feeding resistance of the high-viscosity material (300) in a pipeline,
wherein a pipe section (102), which is filled with the high-viscosity material to be fed, is moved relative to the high-viscosity material (300), which is filled in the pipe section (102), and a pressure acting on the high-viscosity material is determined; and
wherein the feeding resistance of the high-viscosity material is calculated from determined velocities of the relative movement of the high-viscosity material (300) and the pipe section (102) and from pressure values.

16. Method according to claim 15, **characterized in that** the value of a pressure (P), which acts on the high-viscosity material (300), is determined via a velocity measurement or a time measurement.

17. Method according to claim 15 or 16, **characterized in that** the velocity (v) of the relative movement of the high-viscosity material (300) and pipe section is determined via a pressure measurement.

**Revendications**

1. Rhéomètre (100, 400, 500, 600, 700, 900) pour matières épaisses
avec un récipient de réception de matière épaisse (300) ; et

avec un dispositif de mesure ;

**caractérisé en ce que**

le récipient comprend un élément tubulaire (102, 402, 502, 602, 702, 902) pouvant être rempli d'une matière épaisse (300) et comportant un piston (108, 970) mobile par rapport à l'élément tubulaire (102, 402, 502, 602, 702, 902) ;

le dispositif de mesure contenant une unité (146, 147, 148, 646, 682, 684, 946) pour la détermination d'une vitesse (v) du mouvement relatif du piston (108, 970) et de l'élément tubulaire (102, 402, 502, 602, 702, 902) ; et

présentant une unité (160, 660, 960) pour la détermination d'une pression (P) exercée sur le piston (108, 970) par la matière épaisse (300) remplie dans l'élément tubulaire (102, 402, 502, 602, 702, 902), et

une unité de calcul (302, 990) étant prévue, qui effectue un calcul du comportement à l'écoulement de la matière épaisse (300) dans le récipient à partir des vitesses et valeurs de pression déterminées.

2. Rhéomètre selon la revendication 1, **caractérisé en ce qu'**un guidage forcé (106) pour un mouvement rectiligne de l'élément tubulaire (102) d'une première position (A) dans une deuxième position (B) et/ou une autre position est prévu pour l'élément tubulaire (102).

3. Rhéomètre selon la revendication 2, **caractérisé en ce qu'**un mécanisme de verrouillage (136) est prévu pour immobiliser l'élément tubulaire (102) dans la première et/ou dans une autre position (A, B).

4. Rhéomètre selon la revendication 3, **caractérisé en ce qu'**une unité de support (110, 910) réglable pour l'alignement vertical de l'élément tubulaire (102), sur laquelle le piston (108) est disposé de manière stationnaire, est prévue pour la réception de l'élément tubulaire (102, 902) et du piston (108, 970).

5. Rhéomètre selon une des revendications 1 à 4, **caractérisé en ce que** l'unité pour la détermination de la pression (P) agissant sur la matière épaisse (300) du fait du mouvement relatif de la matière épaisse (300) et de l'élément tubulaire (102, 902) comprend un capteur de pression (160) reçu sur le piston (108) ou un capteur de force (960) reçu sur le piston (970).

6. Rhéomètre selon une des revendications 1 à 5, **caractérisé en ce que** l'unité pour générer un mouvement relatif de l'élément tubulaire (102, 702, 902) et du piston (108, 708, 908) présente un moyen (792, 794, 796, 970, 980) pour générer une force d'entraînement (F) agissant sur l'élément tubulaire (102, 702), lequel est de préférence conçu pour générer des force d'entraînement d'intensité différente.

7. Rhéomètre selon la revendication 6, **caractérisé en ce qu'**un poids de charge (794, 796) de préférence variable est prévu comme moyen pour générer une force d'entraînement.

8. Rhéomètre selon la revendication 1, **caractérisé en ce qu'**un piston (108, 970) agissant sur la matière épaisse (300) dans l'élément tubulaire (102) est prévu pour générer un mouvement relatif de l'élément tubulaire (102, 802) et de la matière épaisse (300), le piston (970) étant disposé de manière mobile par rapport à l'élément tubulaire (902).

9. Rhéomètre selon la revendication 8, **caractérisé en ce qu'**un moyen (792, 794, 796, 970, 980) pour générer une force d'entraînement (F) agissant sur le piston (970) est prévu pour générer un mouvement relatif de l'élément tubulaire (102, 702, 802) et du piston (108, 708, 908).

10. Rhéomètre selon une des revendications 1 à 9, **caractérisé en ce qu'**une réduction du diamètre intérieur est formée sur l'élément tubulaire (402) ou un tronçon coudé formé sur l'élément tubulaire (502).

11. Rhéomètre selon une des revendications 1 à 10, **caractérisé en ce que** l'élément tubulaire (102) est composé au moins partiellement d'un matériau transparent, en particulier d'une matière plastique transparente.

12. Rhéomètre selon une des revendications 1 à 11, **caractérisé en ce que** l'élément tubulaire (102) comprend un premier et un deuxième tronçons tubulaires (134, 136) qui sont reliés ensemble et peuvent être séparés l'un de l'autre.

13. Rhéomètre selon une des revendications 1 à 12, **caractérisé en ce qu'**un dispositif (796, 798, 980) pour soumettre la matière épaisse (300) reçue dans l'élément tubulaire (702, 902) à une pression statique est prévu.

14. Dispositif (1000) pour déterminer la résistance au transport d'une matière épaisse dans un système de tuyauterie (1100) avec un rhéomètre (1002) selon une des revendications 1 à 13.

**15.** Procédé pour estimer la pression de refoulement ($P_{FW}$) à appliquer dans une tuyauterie pour surmonter la résistance au transport de matières épaisses (300),
dans lequel un élément tubulaire (102) rempli de la matière épaisse à transporter est déplacé par rapport à la matière épaisse (300) remplie dans l'élément tubulaire (102) et une pression agissant sur la matière épaisse est déterminée en même temps ; et
dans lequel la résistance au transport de la matière épaisse (300) est calculée à partir de vitesses déterminées du mouvement relatif de la matière épaisse (300) et de l'élément tubulaire (102) et à partir de valeurs de pression.

**16.** Procédé selon la revendication 15, **caractérisé en ce que** la valeur d'une pression (P) agissant sur la matière épaisse (300) est déterminée par une mesure de vitesse ou une mesure de temps.

**17.** Procédé selon la revendication 15 ou 16, **caractérisé en ce que** la vitesse (v) du mouvement relatif de la matière épaisse (300) et de l'élément tubulaire (102) est déterminée par une mesure de pression.

Fig.1a

Fig.1b

Fig.2

Fig.3a  Fig.3b  Fig.3c  Fig.3d

Fig.3f

Fig.3e

400

402

450

460

408

446

412

## Fig.4

500

536

502

560

508

546

512

## Fig.5

Fig.6

EP 2 352 983 B1

Fig.7

21

Fig.8

Fig.9

Fig.10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- Comparison of concrete rheometers: International tests at LCPC (Nantes, France. *NISTIR,* Oktober 2000, 6819